Europäisches Patentamt

European Patent Office

Office européen des brevets

(11) Numéro de publication: **0 253 938**
A1

# (12) DEMANDE DE BREVET EUROPEEN

(21) Numéro de dépôt: 86402626.5

(22) Date de dépôt: 26.11.86

(51) Int. Cl.⁴ **F02P 7/02** , F16B 41/00

(30) Priorité: **23.07.86 FR 8610665**

(43) Date de publication de la demande:
**27.01.88 Bulletin 88/04**

(84) Etats contractants désignés:
**DE ES GB IT**

(71) Demandeur: **DUCELLIER ET CIE**
**3/5 Voie Félix Eboué**
**F-94000 Creteil(FR)**

(72) Inventeur: **Forel, Alain**
**8, Place de la Rose Bleue**
**F-77200 Emerainville(FR)**

(74) Mandataire: **Habert, Roger**
**VALEO Service Propriété Industrielle 21 rue**
**Auguste Blanqui**
**F-93406 Saint-Ouen(FR)**

(54) Tête de distributeur d'allumage pour moteur à combustion interne.

(57) Une tête de distributeur d'allumage (1) pour moteurs à combustion interne est fixée sur un corps de
distributeur d'allumage (13) grâce à des vis (14)
glissées à force dans un insert (15) et rendues
imperdables grâce à un bourrelet (16) solidaire de la
tête de distributeur (1).

FIG.2

## TETE DE DISTRIBUTEUR D'ALLUMAGE POUR MOTEURS A COMBUSTION INTERNE

L'invention concerne une tête de distributeur d'allumage notamment pour moteur à combustion interne, constituée par une calotte amovible en matériau isolant traversée par des conducteurs électriques d'amenée de courant qui se terminent dans la face interne de la calotte par des plots conducteurs et débouchent à l'extérieur dans le fond de cheminées prévues sur la calotte et venues de moulage avec la tête et plus particulièrement leur liaison mécanique sur l'extrémité ouverte du carter du distributeur d'allumage qu'elle ferme.

Divers moyens sont connus pour assurer la liaison mécanique de la tête du distributeur sur le carter qui la reçoit tels que des ressorts qui s'accrochent de manière articulée sur ledit carter par une de leurs extrémités tandis que leurs extrémités libres sont adaptées à s'ancrer élastiquement dans des évidements ménagés à cet effet dans la tête du distributeur.

Pour éviter que lors d'un éventuel démontage de la tête, les ressorts puissent être égarés, ceux-ci sont rendus imperdables par divers moyens connus, du carter du distributeur sur lequel ils s'articulent.

Il est connu également d'assurer la liaison mécanique sus-mentionnée par des vis qui traversent le rebord périphérique entourant la calotte en y prenant appui pour être vissées dans le carter.

Comme pour les moyens de liaison précédemment décrits, les vis d'assemblage, lors d'un éventuel démontage de la tête, peuvent être égarées ou tomber dans des endroits peu accessibles du moteur.

Le remplacement instantanné des vis n'est pas toujours aisé lorsque leurs dimensions s'écartent notablement de celles couramment utilisées.

Bien entendu, il vient tout de suite à l'esprit de l'homme de l'art que, pour rendre imperdable les vis, il faut et il suffit de leur adjoindre, de manière connue, une rondelle de retenue agencée pour s'ancrer élastiquement dans les filets de la vis, derrière la pièce qu'elle traverse librement.

L'adjonction d'une pièce supplémentaire dans les moyens d'assemblage entraîne pour une fabrication de grande diffusion, d'une part un coût supplémentaire de l'appareil d'autant plus important que s'ajoutent la manutention, la gestion et le temps d'assemblage de cette rondelle sur la vis qu'elle retient sur la tête qu'elle assemble.

L'invention a pour but de pallier cet inconvénient en assurant avant la liaison mécanique de la tête sur le carter du distributeur, la retenue des vis sur ladite tête sans aucun moyen complémentaire.

L'invention concerne à cet effet une tête de distributeur d'allumage pour moteur à combustion interne constituée par une calotte amovible en matériau isolant, traversée par des conducteurs électriques d'amenée de courant qui se terminent dans la face interne de la calotte par des plots conducteurs et débouchant à l'extérieur dans le fond de cheminées prévues sur la calotte et venues de moulage avec la tête, tête de distributeur dont la liaison mécanique sur l'extrémité ouverte du distributeur qu'elle ferme est assurée par des vis qui traversent le rebord périphérique entourant la calotte en y prenant appui pour être vissées dans le carter du distributeur caractérisé en ce que des bourrelets sensiblement élastiques sont disposés en saillie sur la surface latérale de la tête de distributeur et sur le trajet des têtes des vis lors de la pénétration desdites vis dans les trous qu'elles traversent de manière telle que lesdits bourrelets soient susceptibles de subir un léger écrasement lors du passage desdites têtes de vis pour reprendre ensuite leur forme initiale et maintenir ainsi prisonnière lesdites vis dans leurs trous et conséquemment dans la tête du distributeur. Les bourrelets peuvent aussi être obtenus de matière avec la tête du distributeur.·

Selon une autre caractéristique de l'invention, chacun des bourrelets présente une section angulaire dont l'angle au sommet est dirigé vers la tête de vis.

La description qui va suivre en regard des dessins annexés fera mieux comprendre comment l'invention peut être réalisée.

-La figure 1 représente une tête de distributeur vue de côté.

-La figure 2 représente la tête de distributeur selon la coupe A-A de la figure 1.

-La figure 3 représente à plus grande échelle le détail D de la figure 2 lors de l'introduction de la vis.

-La figure 4 représente à plus grande échelle le détail D de la figure 2 après introduction de la vis.

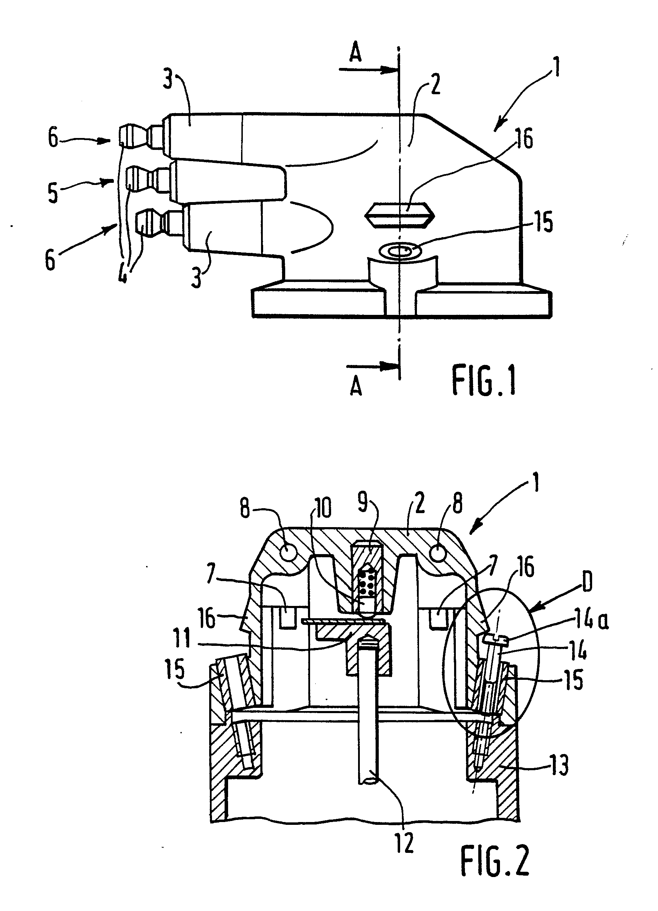

La tête de distributeur d'allumage 1 représentée aux figures 1 et 2 se compose d'une calotte 2 réalisée par moulage de matériau isolant et comporte, venues de matière une pluralité de cheminées 3. Des broches métalliques 4 sont insérées dans chacune des cheminées 3 constituant une entrée 5 et des sorties 6 haute tension.

L'entrée haute tension 5 est reliée à une bobine d'allumage tandis que chacune des sorties haute tension 6 est reliée à une bougie d'allumage. Chacune des sorties haute tension 6 est connectée à une plot 7, grâce à un conducteur métallique 8. L'entrée haute tension 5 est connectée à un insert 9 guidant un frotteur 10 que transmet le courant à un doigt de distribution 11 lequel, solidaire d'une arbre 12 tourrillonnant dans un palier d'un corps de distributeur 13, passe à proximité de chacun des plots 7, un arc électrique dû à la haute tension établissant le chemin du courant. Chaque sortie haute tension 6 est ainsi alternativement alimentée.

L'assemblage de la tête de distributeur 1 sur le corps de distributeur 13 est réalisé grâce à des vis 14 traversant la tête de distributeur 1 et venant se visser sur le corps de distributeur 13.

Les vis 14 se vissent en biais dans le corps de distributeur 13, selon une technique connue par la demanderesse, afin de réduire l'encombrement du distributeur d'allumage par l'absence d'oreilles de fixation.

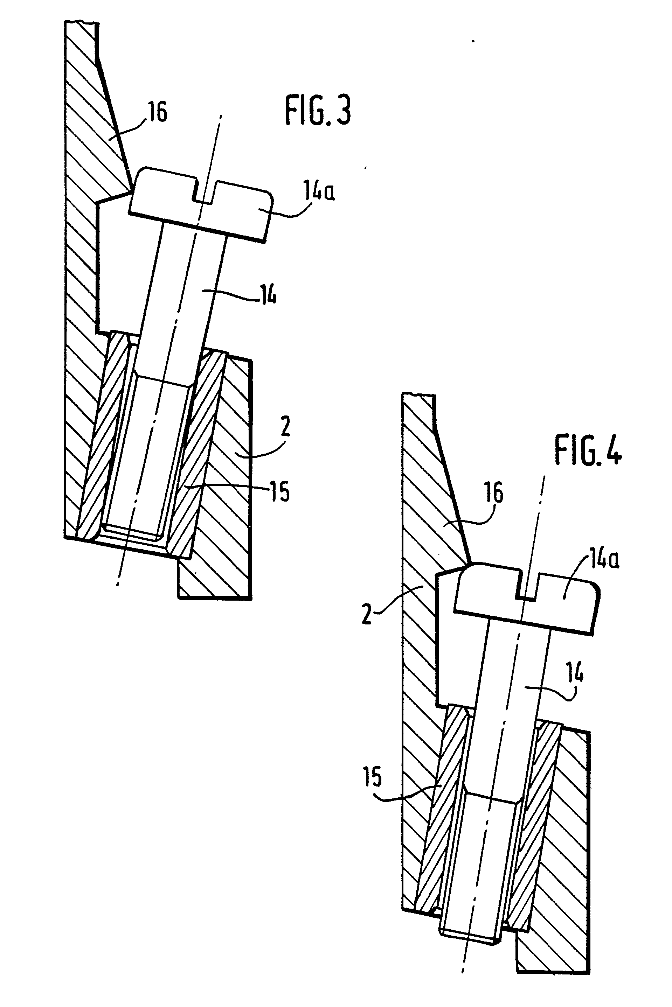

Comme représenté sur la figure 3, la vis de fixation 14 est logée par glissement dans un insert 15 immobilisé dans la calotte 2 de la tête de distributeur 1, dont la tête 14 a vient en contact avec un bourrelet 16 venu de matière avec la calotte 2 ou rapporté sur celle-ci. En appuyant sur la vis 14 afin de la faire pénétrer complètement dans l'insert 15, le bourrelet 16 subit une légère déformation suffisant à laisser passer la tête 14a de la vis 14.

La vis 14, une fois logée dans son emplacement, à savoir l'insert 15, le bourrelet 16 tend à empêcher la vis 14 de sortir totalement de l'insert 15, comme représenté sur la figure 4, rendant ainsi la vis 14 imperdable lors d'un éventuel démontage de la tête de distributeur 1.

Il est bien entendu que la forme du bourrelet 16 représenté sur les figures n'est pas limitative et que l'on pourra choisir toute autre forme selon les caractéristiques élastiques de la matière utilisée pour le moulage de la tête 1 lorsque ledit bourrelet 16 est obtenu de matière avec ladite tête 1.

Il en est de même quand à l'inclinaison de pénétration de la vis 14 qui évidemment peut être parallèle à l'axe de la tête de distributeur 1.

## Revendications

1) Tête de distributeur d'allumage (1) pour moteur à combustion interne, constituée par une calotte (2) amovible en matériau isolant, traversée par des conducteurs électriques (8) d'amenée de courant qui se terminent dans la face interne de la calotte (2) par des plots conducteurs (7) et débouchent à l'extérieur dans le fond de cheminées (3) prévues sur la calotte (2) et venues de moulage avec la tête (1), tête de distributeur (1) dont la liaison mécanique sur l'extrémité ouverte du carter (13) du distributeur qu'elle ferme est assurée par des vis (14) qui traversent le rebord périphérique entourant la calotte (2) en y prenant appui pour être vissées dans le carter (13) du distributeur, caractérisée en ce que des bourrelets (16) sensiblement élastiques sont disposés en saillie sur la surface latérale de la tête de distributeur (1) et sur le trajet des têtes (14a) des vis (14) lors de la pénétration des vis (14) dans les trous qu'elles traversent de manière telle que lesdits bourrelets (16) soient susceptibles de subir un léger écrasement lors du passage des têtes (14a) des vis (14) pour reprendre ensuite leur forme initiale et maintenir ainsi prisonnières lesdites vis (14) dans leurs trous et conséquemment dans la tête de distributeur (1).

2) Tête de distributeur (1), selon la revendication 1, caractérisée en ce que les bourrelets (16) sont obtenus de matière avec ladite tête (1).

3) Tête de distributeur (1), selon les revendications 1 et 2, caractérisée en ce que le bourrelet (16) présente un section angulaire dont l'angle au sommet est dirigé vers la tête de vis (14 a).

FIG.1

FIG.2

0 253 938

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | WO-A-8 504 695 (MARKER PATENTVERWENTUNGS GmbH) <br> * Page 3, ligne 24 - page 4, paragraphe 1 * <br> --- | 1-3 | F 02 P 7/02 <br> F 16 B 41/00 |
| Y | FR-A-2 574 488 (DUCELLIER) <br> * Page 3; revendication; figure 1 * <br> --- | 1-3 | |
| A | US-A-2 574 698 (R.E. HALL) <br> --- | | |
| A | US-A-3 027 433 (C.L. CLEVENGER) <br> ----- | | |

**DOMAINES TECHNIQUES RECHERCHES (Int Cl.4)**

F 02 P
F 16 B

Le present rapport de recherche a ete etabli pour toutes les revendications

| Lieu de la recherche | Date d achevement de la recherche | Examinateur |
|---|---|---|
| LA HAYE | 30-10-1987 | LEROY C.P. |